# EUROPÄISCHE PATENTSCHRIFT

(11) **EP 2 123 506 B1**
(45) Veröffentlichungstag und Bekanntmachung des Hinweises auf die Patenterteilung: **17.11.2010**
(21) Anmeldenummer: 09003648.4
(22) Anmeldetag: 13.03.2009
(51) Int. Cl.: B60N 2/42

(54) **Fahrzeugsitz**
Vehicle seat
Siège de véhicule

(30) Priorität: 05.05.2008 DE 102008022120
(43) Veröffentlichungstag der Anmeldung: 25.11.2009
(73) Patentinhaber: Audi AG, 85045 Ingolstadt (DE)
(72) Erfinder: Grundheber, Christoph, 85080 Gaimersheim (DE); Mangold, Steffen, 73497 Tannhausen (DE); Rezek, Volker, 85080 Gaimersheim (DE); Wendrich, Wolfgang, 85110 Kipfenberg (DE)
(74) Vertreter: Engelhardt, Harald

(56) Entgegenhaltungen:
- WO-A-2005/039922
- DE-A1-102006 003 651

## Beschreibung

Die Erfindung bezieht sich auf einen Fahrzeugsitz mit einer Rückenlehne, welche über ein Sitzbeschlagteil an einem Sitzunterteil befestigt ist, sowie einer Einrichtung zur Dämpfung der bei einem Heckaufprall auftretenden Rückenlehnenbewegung, wobei ein Bügel vorgesehen ist, welcher mit einem Deformationselement derart in Verbindung steht, dass bei der Zurückbewegung der Rückenlehne über das Deformationselement Energie umgewandelt wird.

Ein gattungsgemäßer Fahrzeugsitz ist aus der DE 198 07 581 A1 bekannt. Der Fahrzeugsitz weist dort ein oberes, mit der Rückenlehne verbundenes Sitzbeschlagteil sowie ein unteres, am Sitzunterteil befestigtes Sitzbeschlagteil auf. Beide Sitzbeschlagteile stehen über einen Mechanismus zur Einstellung der Rückenlehnenneigung miteinander in Verbindung. Der untere Sitzbeschlagteil reicht bis etwa in die Mitte des Sitzunterteiles. In diesem Endbereich nimmt das untere Sitzbeschlagteil ein Deformationselement auf, in welches zur Verbindung mit dem Sitzunterteil ein Befestigungselement eingreift. Das untere Sitzbeschlagteil ist um eine Achse schwenkbar, welche zwischen dem Deformationselement und dem Mechanismus zur Einstellung der Rückenlehnenneigung angeordnet ist. Im normalen Fahrzeugbetrieb, also bei Einstellung der Rückenlehne über den vorgesehenen Mechanismus, erfolgt keine Schwenkbewegung des unteren Sitzbeschlagteiles. Bei einer Kollision von hinten findet jedoch aufgrund der erhöhten Belastung der Rückenlehne eine Schwenkbewegung des unteren Sitzbeschlagteiles um die beschriebene Achse statt. Im Zuge dieser Schwenkbewegung wird das im Endbereich des unteren Sitzbeschlagteiles angeordnete Deformationselement relativ zu dem Befestigungselement bewegt. Das Befestigungselement verformt oder zerstört dabei die entsprechenden Bereiche des Deformationselements, wodurch Energie umgewandelt wird.

Der untere Sitzbeschlagteil bildet also einen Bügel, dessen Endbereich mit einem Deformationselement zusammen wirkt. Darüber lässt sich der gewünschte Effekt, nämlich die Dämpfung der Rückenlehnenbewegung bei einem Heckaufprall, erreichen. Durch die Vorrichtung wird jedoch relativ viel Platz vor dem eigentlichen Beschlag benötigt. Nachteilig ist insbesondere, dass sämtliche Kräfte über die Verstelleinrichtung zur Neigungseinstellung der Rückenlehne auf die Dämpfungseinrichtung übertragen werden. Dies können herkömmliche Verstelleinrichtungen nicht ohne weiteres leisten. Es sind deshalb entsprechende Verstärkungsmaßnahmen in der Verstelleinrichtung notwendig, die das Gewicht und die Herstellkosten erhöhen.

Ein gattungsgemäßer Fahrzeugsitz in der DE-A-102006003651 offenbart.

Der vorliegenden Erfindung liegt deshalb die Aufgabe zugrunde, mit einfachen Mitteln einen gattungsgemäßen Fahrzeugsitz so weiterzubilden, dass die Kräfte unter Umgehung der Verstelleinrichtung in das Deformationselement eingeleitet werden. Das Deformationselement soll darüber hinaus in an sich bekannter Weise als separates und leicht lösbares Bauteil ausgebildet sein, um es ggf. nach einer Kollision leicht austauschen zu können.

Die Aufgabe wird dadurch gelöst, dass der mit der Rückenlehne verbundene Sitzbeschlagteil ein Bolzenelement trägt und der Bügel im rückwärtigen Bereich des Sitzunterteils befestigt ist. Darüber hinaus weist der Bügel eine von seiner Befestigungsstelle entfernt angeordnete, längliche Aussparung auf. Das Deformationselement ist die Aussparung übergreifend lösbar an dem Bügel befestigt. Das Bolzenelement ist so ausgebildet und angeordnet, dass es durch die Aussparung hindurchragt und in das Deformationselement eingreift. In der Ausgangslage ist das Bolzenelement in einem Endbereich der Aussparung angeordnet und gelangt ab einer ausreichend großen Kraftbeaufschlagung der Rückenlehne in den anderen Endbereich der Aussparung. Während dieser Bewegung wird das Deformationselement durch das Bolzenelement verformt und die Bewegung gedämpft.

Im Rahmen der Erfindung ist es natürlich auch möglich, je nach den vorhandenen baulichen Gegebenheiten auch die kinematische Umkehr, nämlich die Befestigung des Bolzenelements am Bügel und die Ausbildung der Aussparung am Sitzbeschlagteil, einzusetzen.

Die erfindungsgemäße Ausgestaltung hat den Vorteil, dass sie sehr kompakt baut. Außerdem ist die eigentliche Verstelleinrichtung für die Rückenlehnenneigung von der Einrichtung zur Dämpfung der bei einem Heckaufprall auftretenden Rückenlehnenbewegung nicht beeinflusst. Insofern können auch bei der Realisierung der neuen Lösung vorhandene Bauteile weiter verwendet werden. Durch die Trennung der beiden Funktionen, nämlich Neigungseinstellung und Dämpfungsfunktion bei einem Heckaufprall können die Bauteile optimal an die jeweiligen Aufgaben angepasst werden.

Gemäß einer vorteilhaften Ausgestaltung der Erfindung kann das Sitzbeschlagteil und der Bügel in einer gemeinsamen Lagerung im Rückwärtigen Bereich des Sitzunterteils aufgenommen sein. Dies erspart ein zusätzliches Befestigungselement und entsprechende Montagezeiten.

Der Unteranspruch 3 kennzeichnet eine Bauform der Erfindung, bei der das Bolzenelement mehrere Funktionen übernimmt.

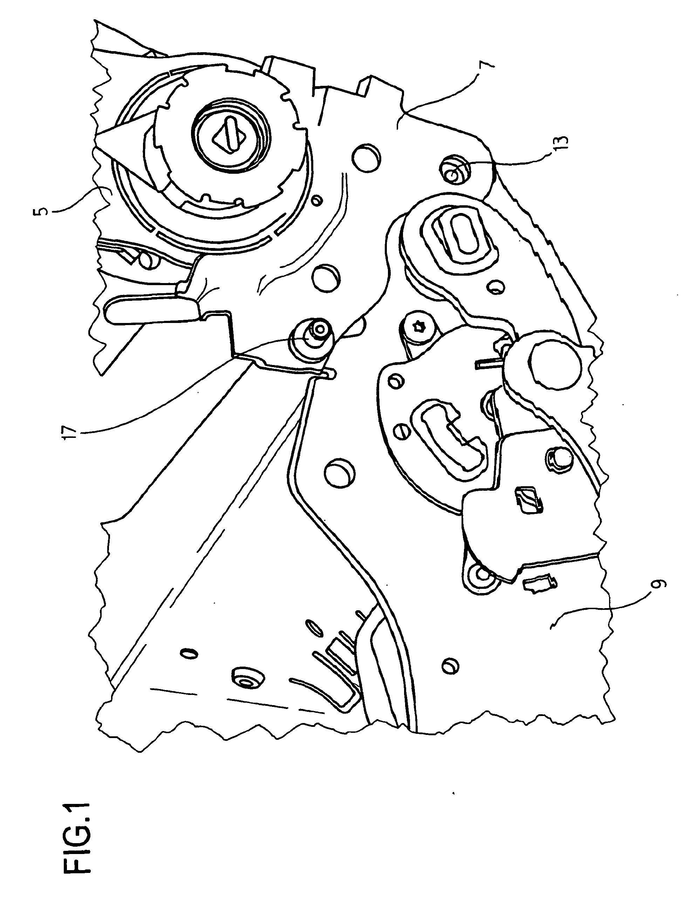

Ein Ausführungsbeispiel der Erfindung ist in der Zeichnung dargestellt und wird nachfolgend näher beschrieben. Es zeigen
- Figur 1: in perspektivischer Darstellung den Anbindungsbereich einer Rückenlehne eines Fahrzeugsitzes an ein Sitzunterteil mit noch nicht montierter Dämpfungseinrichtung für die Rückenlehne,
- Figur 2: die Anordnung aus Figur 1, jedoch mit montiertem Bügel, welcher Bestandteil einer Einrichtung zum Dämpfen der bei einem Heckaufprall auftretenden Rückenlehnenbewegung ist,
- Figur 3: die vollständig montierte Einrichtung mit Bügel und Deformationselement,
- Figur 4a: den Bügel und das Deformationselement als Einzelteil und
- Figur 4b: den Bügel und das Deformationselement aus Fig. 4a in perspektivischer Darstellung.

Die Figuren zeigen in perspektivischer Darstellung und ausschnittsweise die Mechanik eines Fahrzeugsitzes mit einer einstellbaren Rückenlehne 5, welche über ein Sitzbeschlagteil 7 mit dem Sitzunterteil 9 des Fahrzeugsitzes verbunden ist.

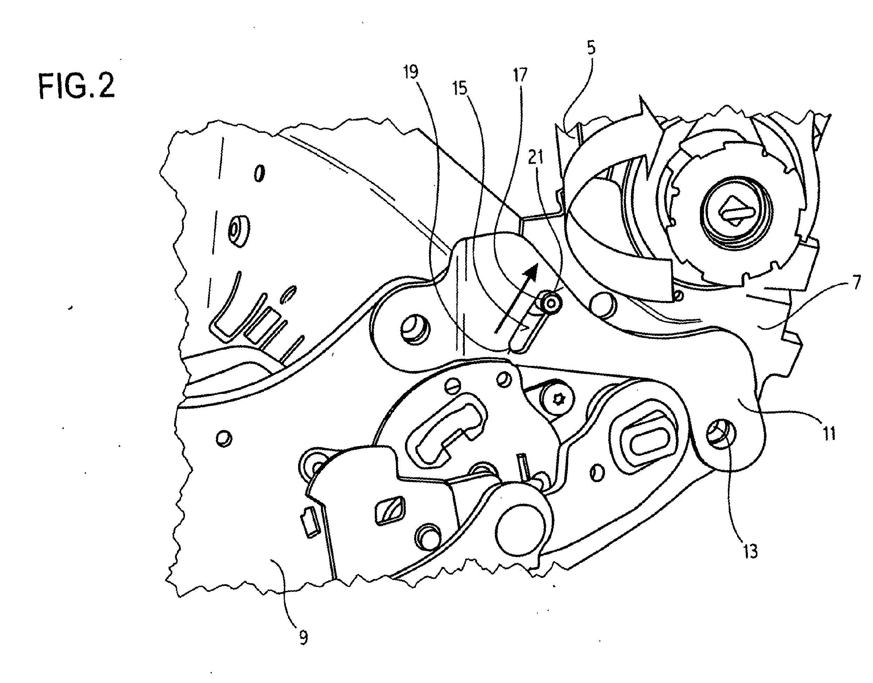

Der dargestellte Fahrzeugsitz ist mit einer Einrichtung versehen, durch welche die bei einem Heckaufprall auftretende Bewegung der Rückenlehne 5 gedämpft werden kann. Diese Einrichtung umfasst einen Bügel 11, der über eine mit 13 bezeichnete Lagerung im rückwärtigen Bereich des Sitzunterteils 9 befestigt ist. Bei der Lagerung 13 handelt es sich um die Anbindungsstelle, an der das Sitzbeschlagteil 7 und damit die Rückenlehne 5 schwenkbar aufgenommen ist. Wie Figur 2 zeigt, ist konzentrisch zu der Lagerung 13 in dem Bügel 11 eine längliche Aussparung 15 vorgesehen durch die ein fest an dem Sitzbeschlagteil 7 befestigtes Bolzenelement 17 hindurchgeführt ist.

In der in Figur 2 wiedergegebenen Montagephase lässt sich das Sitzbeschlagteil 7 mit der Rückenlehne 5 unter Schwenkung um die Lagerung 13 frei zwischen den Anschlägen 19 und 21 der Aussparung 15 bewegen. Dabei entspricht die gezeigte Stellung, also diejenige Stellung, bei der das Bolzenelement 17 an dem Anschlag 21 der Aussparung 15 anliegt, der maximalen Rückverlagerung der Rückenlehne 5.

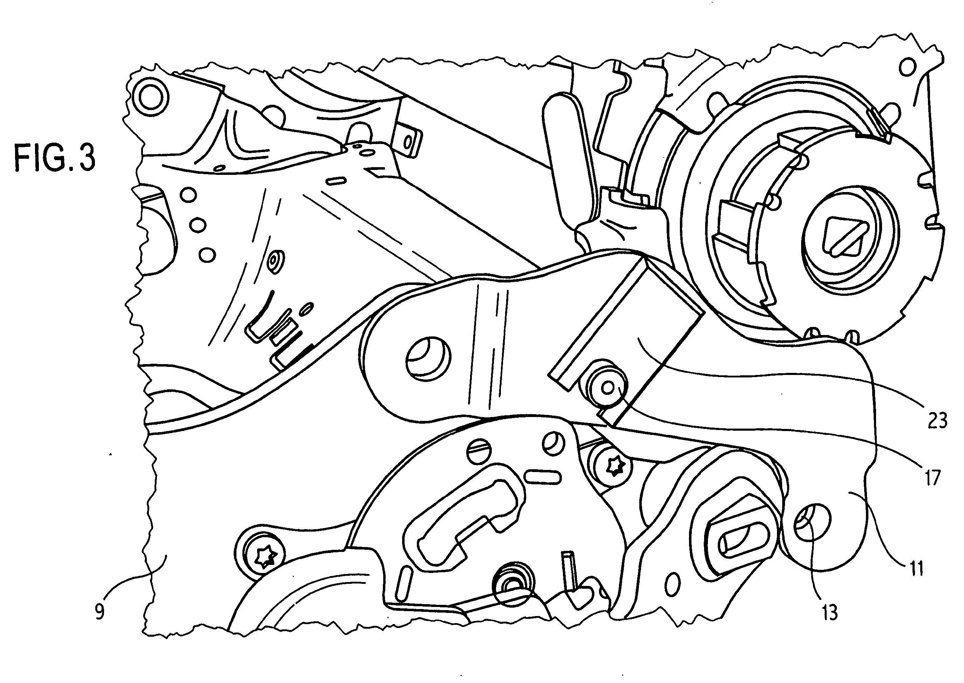

Figur 3 zeigt die Ausgangslage zusammen mit einem an dem Bügel 11 montierten Deformationselement 23. In der Ausgangslage liegt das Bolzenelement 17, hier gebildet durch eine Bundschraube, am Anschlag 19 an. Eine Relativverschiebung des Bolzenelements 17 zu dem Bügel 11 bis zum anderen Anschlag 21 ist nur möglich, wenn das Bolzenelement 17 unter Energieumwandlung das Deformationselement 23 verformt oder zerstört. Das hier nicht näher ausgeführte Deformationselement 23 ist so bemessen, dass die bei einem Heckaufprall bis zu einer bestimmten Größenordnung auftretenden Kräfte gedämpft werden.

Bei einem Heckaufprall mit einer sehr hohen Geschwindigkeit kann das Deformationselement 23 hingegen nur einen sehr kleinen Teil der Energie umwandeln. Das Bolzenelement 17 gelangt deshalb sehr schnell bis an den Anschlag 21, so dass die Rückenlehne 5 nicht weiter gedreht werden kann.

In den Figuren 4a und 4b ist der Bügel 11 und das Deformationselement 23 detailliert detailliert in einer Ansicht sowie in perspektivischer Darstellung wiedergegeben.

## Patentansprüche

1. Fahrzeugsitz mit einer Rückenlehne, welche über ein Sitzbeschlagteil an einem Sitzunterteil befestigt ist, sowie einer Einrichtung zur Dämpfung der bei einem Heckaufprall auftretenden Rückenlehnenbewegung, wobei ein Bügel vorgesehen ist, welcher mit einem Deformationselement derart in Verbindung steht, dass bei der Zurückbewegung der Rückenlehne über das Deformationselement Energie umgewandelt wird, und an dem mit der Rückenlehne (5) verbundenen Sitzbeschlagteil (7) ein Bolzenelement (17) befestigt ist, wobei der Bügel (11) im rückwärtigen Bereich des Sitzunterteils (9) aufgenommen ist, und eine von der Befestigungsstelle des Bügels entfernt angeordnete, längliche Aussparung (15) aufweist, **dadurch gekennzeichnet, dass** das Deformationselement (23) die Aussparung (15) übergreifend lösbar an dem Bügel (11) befestigt ist, dass das Bolzenelement (17) durch die Aussparung (15) hindurchgeführt ist und in das Deformationselement (23) eingreift, derart, dass es in der Ausgangslage in einem Endbereich der Aussparung (15) angeordnet ist und dass ab einer ausreichend großen Kraftbeaufschlagung der Rückenlehne (5) das Bolzenelement (17) nach Verformung des Deformationselements (23) in den anderen Endbereich der Aussparung (15) gelangt.

2. Fahrzeugsitz nach Anspruch 1, **dadurch gekennzeichnet, dass** das Sitzbeschlagteil (7) und der Bügel (11) in einer gemeinsamen Lagerung (13) im rückwärtigen Bereich des Sitzunterteils (9) aufgenommen sind.

3. Fahrzeugsitz nach Anspruch 1 oder 2, **dadurch gekennzeichnet, dass** das Bolzenelement (17) eine Bundschraube ist, welche spielfrei in die Aussparung (15) des Bügels (11) eingreift.

## Claims

1. Vehicle seat with a backrest which is fastened to a seat lower part via a seat fitting part, and with a device for damping the backrest movement which occurs during a rear collision, wherein a bow is provided, said bow being connected to a deformation element in such a manner that, when the backrest is moved back, energy is converted via the deformation element, and a bolt element (17) is fastened to the seat fitting part (7) which is connected to the backrest (5), wherein the bow (11) is accommodated in the rearward region of the seat lower part (9) and has an elongate recess (15) which is arranged at a distance from the fastening point of the bow, **characterized in that** the deformation element (23) is fastened releasably to the bow (11) in a manner engaging over the recess (15), **in that** the bolt element (17) is guided through the recess (15) and engages in the deformation element (23) in such a manner that, in the initial position, said bolt element is arranged in an end region of the recess (15), and **in that**, above a sufficiently large application of force to the backrest (5), the bolt element (17) passes into the other end region of the recess (15) following deformation of the deformation element (23).

2. Vehicle seat according to Claim 1, **characterized in that** the seat fitting part (7) and the bow (11) are accommodated in a common mounting (13) in the rearward region of the seat lower part (9).

3. Vehicle seat according to Claim 1 or 2, **characterized in that** the bolt element (17) is a collar screw which engages without play in the recess (15) of the bow (11).

## Revendications

1. Siège de véhicule comprenant un dossier, qui est fixé par le biais d'une partie de ferrure de siège à une partie inférieure de siège, ainsi qu'un dispositif pour amortir le mouvement du dossier se produisant dans le cas d'un choc par l'arrière, un étrier étant prévu, lequel est en liaison avec un élément de déformation de telle sorte que lors du mouvement vers l'arrière du dossier, de l'énergie soit convertie par le biais de l'élément de déformation et un élément de boulon (17) étant fixé à la partie de ferrure de siège (7) connectée au dossier (5), l'étrier (11) étant reçu dans la région arrière de la partie inférieure de siège (9) et présentant un évidement (15) allongé, disposé à l'écart du point de fixation de l'étrier, **caractérisé en ce que** l'élément de déformation (23) est fixé à l'étrier (11) de manière amovible en s'engageant pardessus l'évidement (15), **en ce que** l'élément de boulon (17) est guidé à travers l'évidement (15) et s'engage dans l'élément de déformation (23), de telle sorte qu'il soit disposé dans la position de départ dans une région d'extrémité de l'évidement (15) et qu'à partir d'une sollicitation en force suffisamment grande du dossier (5), l'élément de boulon (17) parvienne, après déformation de l'élément de déformation (23), dans l'autre région d'extrémité de l'évidement (15).

2. Siège de véhicule selon la revendication 1, **caractérisé en ce que** la partie de ferrure de siège (7) et l'étrier (11) sont reçus dans un support de palier commun (13) dans la région arrière de la partie inférieure de siège (9).

3. Siège de véhicule selon la revendication 1 ou 2, **caractérisé en ce que** l'élément de boulon (17) est une vis à embase, qui s'engage sans jeu dans l'évidement (15) de l'étrier (11).
